# FASCICULE DE BREVET EUROPEEN

(11) **EP 3 393 820 B1**
(45) Date de publication et mention de la délivrance du brevet: **22.09.2021**
(21) Numéro de dépôt: 16829267.0
(22) Date de dépôt: 21.12.2016
(51) Int. Cl.: B42D 25/41, B42D 25/324, B41M 5/24, B44C 1/22, B44F 1/10, B41M 3/14, B41M 5/26

(54) **PROCÉDÉ DE RÉALISATION D'IMAGES SÉLECTIVEMENT VISIBLES EN VARIANT L'ANGLE D'OBSERVATION PAR GRAVURE AU TRAVERS D'UN RÉSEAU LENTICULAIRE**
VERFAHREN ZUR HERSTELLUNG VON DURCH ÄNDERUNG DES BETRACHTUNGSWINKELS SELEKTIV BETRACHTBAREN BILDERN MITTELS ÄTZEN DURCH EIN LINSENFÖRMIGES GITTER
PROCESS FOR PRODUCING, BY ETCHING THROUGH A LENTICULAR GRATING, IMAGES THAT MAY BE SELECTIVELY VIEWED BY VARYING ANGLE OF OBSERVATION

(30) Priorité: 23.12.2015 FR 1563244
(43) Date de publication de la demande: 31.10.2018
(73) Titulaire: IDEMIA France, 92400 Courbevoie (FR)
(72) Inventeur: VANDROUX, Coralie, 92700 Colombes (FR); MOREL, Yvonnic, 92700 Colombes (FR); BERTHE, Benoit, 92700 Colombes (FR)
(74) Mandataire: Santarelli
(86) Numéro de dépôt international: PCT/FR2016/053612
(87) Numéro de publication internationale: WO 2017/109412

(56) Documents cités:
- EP-A1- 1 876 028
- EP-A1- 2 050 574
- US-A1- 2010 103 528

## Description

La présente invention concerne un procédé de réalisation d'au moins deux images, sélectivement visibles en variant l'angle d'observation.

Il est connu de réaliser de telles images en entrelaçant lesdites images et en disposant l'entrelacement résultant sous un réseau lenticulaire. Cette combinaison d'un entrelacement et d'un réseau lenticulaire adapté permet d'obtenir un dispositif dans lequel une première image est visible lorsque le dispositif est observé selon un premier angle d'observation et au moins une deuxième image est visible lorsque le dispositif est observé selon un deuxième angle d'observation, différent du premier angle d'observation.

Selon une famille de procédé, l'entrelacement est pré-réalisé, typiquement par impression, pour être ensuite placé sous le réseau lenticulaire.

Selon une autre famille de procédé, plus particulièrement adaptée à une personnalisation, une couche sensible au laser est disposée sous le réseau lenticulaire et les images sont réalisées par gravure laser au travers du réseau lenticulaire.

On entend par personnalisation, une individuation du dispositif, où une image dépend de données individuelles, par exemple liées au porteur du dispositif. Il en est ainsi, par exemple, lorsqu'une image reproduit une photo d'identité du porteur. Ceci est rendu possible par l'opération de gravure laser qui permet une réalisation tardive dans le procédé de fabrication, lorsque les données sont disponibles, et adaptée à un unique dispositif.

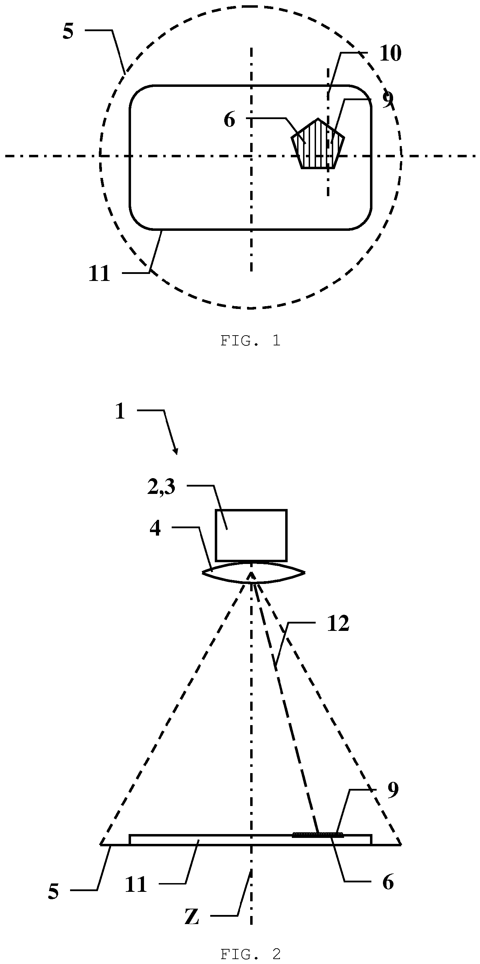

Tel qu'illustré aux figures 1,2, une gravure laser est classiquement réalisée au moyen d'un outillage 1 comprenant un laser 2, apte à émettre un faisceau laser 12, une tête galvanométrique 3 comprenant deux miroirs mobiles afin d'être apte à dévier le faisceau laser 12 dans l'espace afin de balayer la surface de la zone de gravure 6 contenant l'image à graver, et une lentille 4 apte à focaliser le faisceau laser 12. Un tel outillage 1, particulièrement sa lentille 4, définit un axe optique Z et une zone de travail 5. L'axe optique Z est l'axe central de tir laser. La zone de travail 5 est une zone, centrée autour de l'axe optique Z où une gravure et possible. Au-delà de la zone de travail 5, les déformations optiques sont trop importantes.

Selon l'art antérieur, un dispositif 11 que l'on souhaite graver, dans une zone de gravure 6, est centré sur l'axe optique Z.

La zone de gravure 6 est recouverte d'un réseau lenticulaire 9, au travers duquel passe le faisceau laser 12.

De par le principe même des réseaux lenticulaires, il est nécessaire, afin de séparer deux images pour éviter toute interférence visuelle, de graver chaque image selon un angle moyen distant de l'angle moyen d'une autre image.

L'art antérieur propose au moins deux approches pour répondre à ce besoin.

Selon une première approche, par exemple illustrée par WO 2011074956, l'orientation du dispositif relativement à l'outillage de gravure laser est modifiée. Ceci est réalisé en plaçant le dispositif sur un plateau inclinable autour d'un axe perpendiculaire à l'axe optique. Un inconvénient d'une telle approche est la complexité mécanique d'un tel plateau inclinable. De plus, un tel plateau doit encore être mobile en translation selon l'axe optique afin de corriger une défocalisation produite par l'inclinaison.

Selon une autre approche, typiquement illustrée par EP 2050574, un miroir de déviation par image, réglable en orientation mais fixe durant une gravure, est utilisé pour dévier le faisceau laser et ainsi obtenir des angles moyens de gravure différents. Un inconvénient important est que le réglage d'un miroir de déviation dépend de la position de la zone de gravure relativement au dispositif, et rend ainsi difficile un changement de cette position. Un autre inconvénient est que la distance parcourue par le faisceau laser peut être différente en fonction de la localisation de l'image et peut conduire à des variations de la densité laser. De plus une telle approche ne permet pas de réaliser une registration au travers de la tête galvanométrique, obligatoire notamment lors de la réalisation d'une image couleur.

Par ailleurs, le document US 2010/0103528, décrit un procédé permettant de réaliser des images composites, sur une feuille à microlentilles, dont au moins l'une des images donne l'impression de flotter. Pour cela, un transfert de matériau est réalisé, depuis un matériau donneur, vers une couche de matériau disposée adjacente à la feuille de microlentilles. Pour cela, une source de radiation à faisceau fortement divergent est utilisée, en combinaison avec au moins un masque.

La présente invention remédie à ces différents inconvénients

L'invention a pour objet un procédé de réalisation d'une première image et d'au moins une deuxième image, sélectivement visibles en variant l'angle d'observation, sous un réseau lenticulaire, dans une zone de gravure, par gravure laser, au moyen d'un outillage comprenant : un laser apte à émettre un faisceau laser, une tête galvanométrique apte à dévier le faisceau laser et une lentille apte à focaliser le faisceau laser, et définissant un axe optique et une zone de travail, comprenant les étapes suivantes : mise en place de la zone de gravure à une première localisation, incluse dans la zone de travail, en périphérie de la zone de travail, et perpendiculairement à l'axe optique, la première localisation étant distante de l'axe optique de telle manière à ce que l'angle moyen du faisceau laser relativement à l'axe optique soit supérieur ou égal à 15°, gravure de la première image par le laser dans la zone de gravure, mise en place de la zone de gravure à une deuxième localisation différente de la première localisation, par un mouvement de translation, par un plateau portant un dispositif en cours de gravure, depuis la première localisation dans un même plan, la deuxième localisation étant incluse dans la zone de travail, en périphérie de la zone de travail, et perpendiculairement à l'axe optique, la deuxième localisation étant distante de l'axe optique de telle manière à ce que l'angle moyen du faisceau laser relativement à l'axe optique soit supérieur ou égal à 15°, gravure de la deuxième image par le laser dans la zone de gravure.

Selon une autre caractéristique, la gravure d'une image est réalisée au moyen du faisceau laser dévié par la tête galvanométrique de manière à balayer la zone de gravure.

Selon une autre caractéristique, la lentille est une lentille de balayage.

Selon une autre caractéristique, la deuxième localisation est symétrique de la première localisation, relativement à l'axe optique.

Selon une autre caractéristique, le réseau lenticulaire est cylindrique et la deuxième localisation est symétrique de la première localisation, relativement à un axe parallèle à l'axe du réseau lenticulaire, coupant l'axe optique, et situé dans le plan du réseau lenticulaire.

Selon une autre caractéristique, la première localisation et la deuxième localisation sont situées dans un même plan relativement à l'axe optique.

Selon une autre caractéristique, la taille de la zone de gravure est faible devant la taille de la zone de travail, préférentiellement inférieure à 15% de la taille la zone de travail.

Selon une autre caractéristique, la gravure d'une grande image est réalisée en découpant l'image en parties contiguës, chaque partie étant affectée à une zone de gravure contiguë, et en réalisant pour chaque partie : mise en place de la zone de gravure correspondant à ladite partie en périphérie de la zone de travail et perpendiculairement à l'axe optique, gravure de ladite partie de l'image.

Selon une autre caractéristique, le procédé est appliqué à la personnalisation d'un document identitaire.

Selon un aspect non revendiqué, un dispositif est obtenu par un tel procédé.

Selon un autre aspect non revendiqué, le réseau lenticulaire ou l'une au moins des images gravées occupe une surface supérieure à 1 cm², préférentiellement supérieure à 3,5 x 4,5 cm.

Selon un autre aspect non revendiqué, une matrice couleur est disposée sous le réseau lenticulaire afin de pouvoir graver au moins une image en couleur.

Selon un autre aspect non revendiqué, la première image et ladite au moins une deuxième image sont appariées de manière à produire un effet 3D.

D'autres caractéristiques, détails et avantages de l'invention ressortiront plus clairement de la description détaillée donnée ci-après à titre indicatif en relation avec des dessins sur lesquels :
- la figure 1, déjà décrite, présente en vue de dessus un dispositif en cours de gravure,
- la figure 2, déjà décrite, présente en vue de côté, le dispositif de la figure 1,
- la figure 3 présente en vue de côté un dispositif en cours de gravure pour réaliser une première image,
- la figure 4 présente une vue de dessus correspondant à la figure 3,
- la figure 5 présente en vue de côté le dispositif des figures 3 et 4, en cours de gravure pour réaliser une deuxième image,
- la figure 6 présente une vue de dessus correspondant à la figure 5.

La réalisation d'une image par gravure laser est classiquement obtenue, tel que précédemment décrit en référence aux figures 1 et 2. Un faisceau laser 12 tiré par un laser 2 est dévié par une tête galvanométrique 3 afin de balayer la surface d'une zone de gravure 6 couvrant au moins toute la surface de l'image. Le faisceau laser 12 dévié est corrigé en traversant une lentille 4. La zone de gravure 6 est recouverte d'un réseau lenticulaire 9. Le faisceau laser 12 traverse le réseau lenticulaire 9 pour atteindre une couche sensible, présente dans la zone de gravure 6, et qui noircit en proportion de la puissance laser reçue. Cette carbonisation sélective permet de créer une image monochrome en niveau de gris directement ou une image couleur tel que décrit dans EP 11714352.9 ou FR 1103919 indirectement par masquage sélectif d'une matrice couleur.

Dans le cas d'images multiples sélectivement visibles en variant l'angle d'observation, une telle gravure au travers du réseau lenticulaire 9, nécessite des angles bien distincts d'une image à l'autre.

Pour cela, l'idée de base de l'invention est de mettre à profit les angles d'incidence élevés résultant d'une disposition de la zone de gravure 6 en périphérie de la zone de travail 5.

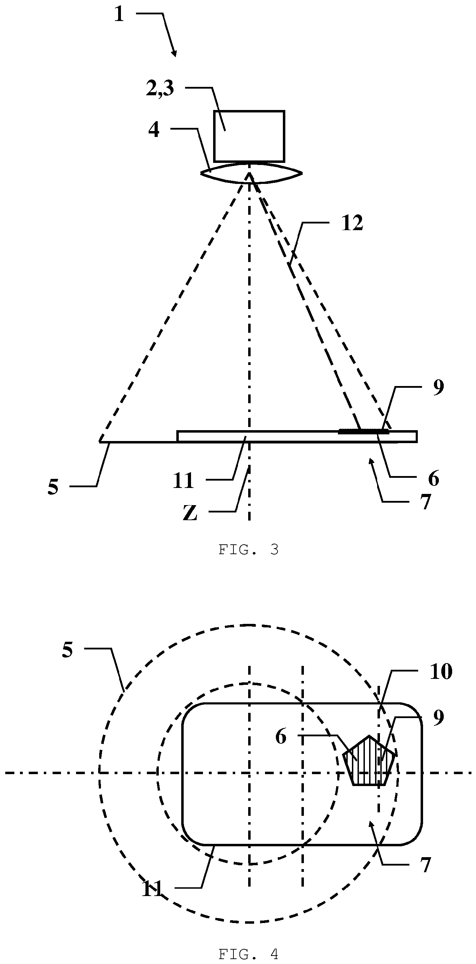

Le procédé comprend alors les étapes suivantes. Au cours d'une première étape, plus particulièrement illustrée aux figures 3 et 4, la zone de gravure 6 est mise en place à une première localisation 7. Cette localisation 7 est obligatoirement incluse dans la zone de travail 5, pour que l'on puisse réaliser une gravure de bonne qualité. Elle est de plus disposée sensiblement en périphérie de la zone de travail 5, ce qui permet avantageusement d'obtenir un angle d'incidence, angle entre le faisceau laser 12 et l'axe optique Z, des plus élevés. Le dispositif 11 et la zone de gravure 6 restent perpendiculaires à l'axe optique Z, afin de rester dans les conditions, de focales notamment, nominales d'utilisation de l'outillage 1.

Après cette mise en place, la première image peut être gravée, de manière classique, au cours d'une deuxième étape.

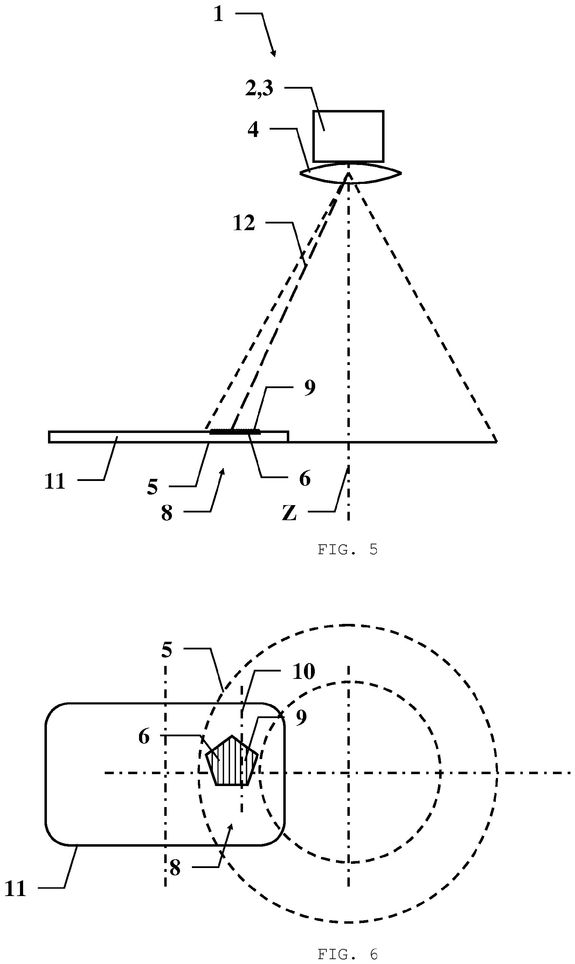

Au cours d'une troisième étape, plus particulièrement illustrée aux figures 5 et 6, la zone de gravure 6 est déplacée pour être mise en place à une deuxième localisation 8. Cette deuxième localisation 8 est obligatoirement incluse dans la zone de travail 5, pour que l'on puisse réaliser une gravure de bonne qualité. Elle est de plus disposée sensiblement en périphérie de la zone de travail 5, ce qui permet avantageusement d'obtenir un angle d'incidence, des plus élevés. La deuxième localisation 8 est choisie afin que cet angle soit éloigné de l'angle d'incidence obtenu pour la première localisation 7. Le dispositif 11 et la zone de gravure 6 restent perpendiculaires à l'axe optique Z, afin de rester dans les conditions nominales d'utilisation de l'outillage 1.

Après cette mise en place, la deuxième image peut être gravée, de manière classique, au cours d'une quatrième étape.

La lentille 4 employée a pour fonction de redresser les déformations causées par le balayage sphérique de la tête galvanométrique 3 suivi d'une projection sur le plan du dispositif 11, confondu avec le plan de la zone de gravure 6. Une lentille 4 classiquement employée pour cela est une lentille à balayage, encore nommée lentille F-Theta. Une telle lentille à balayage a pour propriété de fournir une déviation (dans le plan image) proportionnelle à l'angle de déviation (angle du faisceau 12 à l'entrée de la lentille. Ceci permet de conserver une taille de point constant malgré une variation de l'angle de déviation du faisceau 12.

Selon un mode de réalisation, la deuxième localisation 8 est symétrique de la première localisation 7, relativement à l'axe optique Z. Ainsi si la première localisation 7 permet un angle moyen d'incidence X°, la deuxième localisation 8 permet un angle opposé -X°.

Le réseau lenticulaire 9 peut être de tout type. En fonction du type l'homme du métier adaptera les enseignements contenus dans la présente au type particulier de réseau lenticulaire 9.

Dans le cas particulier, correspondant à la grande majorité des cas d'usage, où le réseau lenticulaire 9 est cylindrique, l'angle d'incidence de tir laser moyen évolue en tournant autour de l'axe 10 du réseau lenticulaire 9. Aussi, tel qu'illustré aux figures 3-6, la deuxième localisation 8 est avantageusement choisie symétrique de la première localisation 7, relativement à une parallèle à l'axe 10 du réseau lenticulaire 9, ayant une intersection avec l'axe optique Z, et située dans le plan de travail ou plan du réseau lenticulaire 9.

Selon une autre caractéristique, la première localisation 7 et la deuxième localisation 8 sont situées dans un même plan relativement à l'axe optique Z. Ceci correspond à un même plan de travail pour lequel l'outillage 1 est optimisé. Le dispositif 11 et la zone de gravure 6 sont dans la profondeur de champ de l'outillage 1. De plus cette caractéristique est avantageuse en ce qu'elle permet de réaliser un déplacement du dispositif 11 de la première localisation 7 à la deuxième localisation 8 par un mouvement simple de translation dans son plan. Un tel mouvement est aisément réalisable par translation d'un plateau portant le dispositif 11 ou par translation du dispositif 11 sur ledit plateau.

Dans tous les cas, et pour tous les types de réseau lenticulaire 9, les localisations 7,8 doivent être en périphérie de la zone de travail 5, soit telles que la bordure de la zone de gravure 6 soit sensiblement tangente à la bordure de la zone de travail 5. Afin de bien séparer les images gravées, les localisations 7,8 sont distantes l'une de l'autre et/ou de l'axe optique Z, de telle manière à ce que l'angle moyen du faisceau laser 12, relativement à l'axe optique Z, soit supérieur ou égal à 15°.

Chaque lentille 4 classiquement utilisée détermine un angle d'ouverture. Ainsi une lentille de diamètre 100 mm permet une zone de travail de taille/rayon 35 mm et doit être utilisée à une distance lentille/dispositif de 120 mm. Une lentille de diamètre 163 mm permet une zone de travail de taille/rayon 60 mm et doit être utilisée à une distance lentille/dispositif de 200 mm. L'angle de demi ouverture est ainsi sensiblement le même, légèrement inférieur à 17°. Un angle moyen d'incidence de 15° est donc réalisable en périphérie de la zone de travail 5.

Toujours, afin de séparer les images, il convient de garder un angle central à proximité de l'axe optique Z non utilisé pour la gravure des images. Ceci revient à ne pas utiliser la zone centrale de la zone de travail 5. En s'interdisant un cône central de demi-angle 10°, ceci revient à ne pas utiliser une zone centrale de 30% de la taille/diamètre de la zone de travail 5 ou de 15% de la demi-taille/rayon.

Cette dernière contrainte limite la taille maximale de la zone de gravure 6 mais permet de bénéficier des avantages de l'invention : le déplacement du dispositif 11 entre les différentes localisations 7,8 est simple et répétable.

De plus un système de vision, peut avantageusement, voir au travers de l'ensemble tête galvanométrique 3 et lentille 4, et être utilisé pour réaliser une registration. Ceci est rendu possible par le fait que des marques de registration, présentes sur le dispositif 11, sont visibles, le dispositif 11 étant visible en entier, et identiquement à lui-même d'une localisation 7,8 à l'autre, au travers de la tête galvanométrique 3 et de la lentille 4.

La contrainte précédemment décrite de limitation de la taille maximale de la zone de gravure 6 ne limite cependant pas la taille d'une image gravée. Pour une grande image, soit une image plus grande que la taille maximale pour une zone de gravure 6, il est possible de découper l'image en parties contiguës, chacune de taille inférieure à la taille maximale d'une zone de gravure 6. Chaque partie est affectée à une zone de gravure 6 correspondante. Les zones de gravures 6 sont donc contiguës de même manière que les parties sont contiguës. Il est ensuite réalisé pour chaque partie : mise en place de la zone de gravure 6 correspondant à ladite partie en périphérie de la zone de travail 5 et perpendiculairement à l'axe optique Z et gravure de ladite partie de l'image. Le fait que la zone de gravure 6 soit disposée en périphérie de la zone de travail 5 garantit que l'angle d'incidence moyen du faisceau laser 12 est élevé. Une grande image peut ainsi être gravée, partie par partie, en repositionnant le support et chaque zone de gravure entre deux parties, de manière à conserver toujours un angle d'incidence moyen du faisceau laser 12 élevé.

Aussi, en partitionnant ainsi une image, la contrainte de taille de la zone de gravure 6 pouvant être gravée en une seule fois, sans déplacement du support, n'entraîne pas de limitation sur la taille d'une image. Ainsi la taille d'au moins une image, le cas échéant couverte par le réseau lenticulaire 9, n'est pas limitée et peut occuper une surface supérieure à 1 cm². Il est ainsi possible de réaliser par exemple une image de taille supérieure à 3,5 x 4,5 cm, permettant ainsi de réaliser une photo d'identité.

Avantageusement, la pluralité d'images gravées comprenant la première image et ladite au moins une deuxième image sont choisies appariées de manière à produire un effet 3D. On entend ici par appariées, des images d'un même sujet/objet vues selon des angles différents, de telle manière à reproduire un effet de relief lorsque les images sont vues en séquence.

## Revendications

1. Procédé de réalisation d'une première image et d'au moins une deuxième image, sélectivement visibles en variant l'angle d'observation, par gravure laser d'un dispositif (11) que l'on souhaite graver dans une zone de gravure (6) recouverte d'un réseau lenticulaire (9), ladite gravure laser étant réalisée au moyen d'un outillage (1) comprenant : un laser (2) apte à émettre un faisceau laser (12), une tête galvanométrique (3) apte à dévier le faisceau laser (12) et une lentille (4) apte à focaliser le faisceau laser (12), et définissant un axe optique (Z) et une zone de travail (5), ***caractérisé en ce qu'il*** comprend les étapes suivantes :
- mise en place, perpendiculairement à l'axe optique (Z), de la zone de gravure (6) à une première localisation (7), incluse dans la zone de travail (5), et disposée en périphérie de ladite zone de travail (5), la première localisation (7) étant distante de l'axe optique (Z) de telle manière à ce que l'angle moyen du faisceau laser (12) relativement à l'axe optique (Z), soit supérieur ou égal à 15°,
- gravure de la première image par le laser (2) dans la zone de gravure (6),
- mise en place, perpendiculairement à l'axe optique (Z), de la zone de gravure (6) à une deuxième localisation (8), différente de la première localisation (7), par un mouvement de translation dans un même plan, depuis la première localisation à ladite deuxième localisation, d' un plateau portant le dispositif (11) en cours de gravure, la deuxième localisation (8) étant incluse dans la zone de travail (5), et disposée en périphérie de ladite zone de travail (5), la deuxième localisation (8) étant distante de l'axe optique (Z) de telle manière à ce que l'angle moyen du faisceau laser (12) relativement à l'axe optique (Z), soit supérieur ou égal à 15°,
- gravure de la deuxième image par le laser (2) dans la zone de gravure (6).

2. Procédé selon la revendication **1,** où la gravure d'une image est réalisée au moyen du faisceau laser (12) dévié par la tête galvanométrique (3) de manière à balayer la zone de gravure (6).

3. Procédé selon l'une quelconque des revendications **1** ou **2,** où la lentille (4) est une lentille de balayage.

4. Procédé selon l'une quelconque des revendications **1** à **3,** où la deuxième localisation (8) est symétrique de la première localisation (7), relativement à l'axe optique (Z).

5. Procédé selon l'une quelconque des revendications **1** à **4,** où le réseau lenticulaire (9) est cylindrique et où la deuxième localisation (8) est symétrique de la première localisation (7), relativement à un axe parallèle à l'axe (10) du réseau lenticulaire (9), coupant l'axe optique (Z) et situé dans le plan du réseau lenticulaire (9).

6. Procédé selon l'une quelconque des revendications **1** à **5,** où la première localisation (7) et la deuxième localisation (8) sont situées dans un même plan relativement à l'axe optique (Z).

7. Procédé selon l'une quelconque des revendications **1** à **6,** où la taille de la zone de gravure (6) est faible devant la taille de la zone de travail (5), préférentiellement inférieure à 15% de la taille la zone de travail (5).

8. Procédé selon l'une quelconque des revendications **1** à **7,** où la gravure d'une grande image est réalisée en découpant l'image en parties contiguës, chaque partie étant affectée à une zone de gravure (6) contiguë, et en réalisant pour chaque partie :
- mise en place, perpendiculairement à l'axe optique (Z), de la zone de gravure (6) correspondant à ladite partie en périphérie de la zone de travail (5),
- gravure de ladite partie de l'image.

9. Procédé selon l'une quelconque des revendications **1** à **8,** appliqué à la personnalisation d'un document identitaire.

## Patentansprüche

1. Verfahren zur Herstellung eines ersten Bildes und mindestens eines zweiten Bildes, die durch Ändern des Betrachtungswinkels selektiv sichtbar sind, durch Lasergravur einer Vorrichtung (11), die man gravieren möchte, in einem Gravurbereich (6), der von einem Linsenraster (9) bedeckt ist, wobei die Lasergravur mittels eines Werkzeugs (1) ausgeführt wird, das umfasst: einen Laser (2), der geeignet ist, einen Laserstrahl (12) zu emittieren, einen Galvanometerkopf (3), der geeignet ist, den Laserstrahl (12) abzulenken, und eine Linse (4), die geeignet ist, den Laserstrahl (12) zu bündeln, und eine optische Achse (Z) und einen Arbeitsbereich (5) definiert, **dadurch gekennzeichnet, dass** es die folgenden Schritte umfasst:
- senkrecht zur optischen Achse (Z), Einrichtung des Gravurbereichs (6) an einer ersten Stelle (7), die in dem Arbeitsbereich (5) enthalten ist und am Umfang des Arbeitsbereichs (5) angeordnet ist, wobei die erste Stelle (7) derart von der optischen Achse (Z) entfernt ist, dass der mittlere Winkel des Laserstrahls (12) in Bezug auf die optische Achse (Z) größer oder gleich 15° ist,
- Gravur des ersten Bildes durch den Laser (2) in dem Gravurbereich (6),
- senkrecht zur optischen Achse (Z), Einrichtung des Gravurbereichs (6) an einer zweiten Stelle (8), die sich von der ersten Stelle (7) unterscheidet, durch eine Translationsbewegung einer Platte, die die Vorrichtung (11) im Laufe der Gravur trägt, in einer gleichen Ebene ausgehend von der ersten Stelle bis zur zweiten Stelle, wobei die zweite Stelle (8) in dem Arbeitsbereich (5) enthalten ist und am Umfang des Arbeitsbereichs (5) angeordnet ist, wobei die zweite Stelle (8) derart von der optischen Achse (Z) entfernt ist, dass der mittlere Winkel des Laserstrahls (12) in Bezug auf die optische Achse (Z) größer oder gleich 15° ist,
- Gravur des zweiten Bildes durch den Laser (2) in dem Gravurbereich (6).

2. Verfahren nach Anspruch 1, wobei die Gravur eines Bildes mittels des derart von dem Galvanometerkopf (3) abgelenkten Laserstrahls (12) ausgeführt wird, dass der Gravurbereich (6) abgetastet wird.

3. Verfahren nach einem der Ansprüche 1 oder 2, wobei die Linse (4) eine Abtastlinse ist.

4. Verfahren nach einem der Ansprüche 1 bis 3, wobei die zweite Stelle (8) symmetrisch zur ersten Stelle (7) in Bezug auf die optische Achse (Z) ist.

5. Verfahren nach einem der Ansprüche 1 bis 4, wobei das Linsenraster (9) zylindrisch ist und wobei die zweite Stelle (8) symmetrisch zur ersten Stelle (7) in Bezug auf eine Achse ist, die parallel zur Achse (10) des Linsenrasters (9) ist, die optische Achse (Z) schneidet und sich in der Ebene des Linsenrasters (9) befindet.

6. Verfahren nach einem der Ansprüche 1 bis 5, wobei die erste Stelle (7) und die zweite Stelle (8) sich in einer gleichen Ebene in Bezug auf die optische Achse (Z) befinden.

7. Verfahren nach einem der Ansprüche 1 bis 6, wobei die Größe des Gravurbereichs (6) gegenüber der Größe des Arbeitsbereichs (5) gering und vorzugsweise kleiner als 15 % der Größe des Arbeitsbereichs (5) ist.

8. Verfahren nach einem der Ansprüche 1 bis 7, wobei die Gravur eines großen Bildes durch Schneiden des Bildes in angrenzende Teile, wobei jeder Teil einem angrenzenden Gravurbereich (6) zugewiesen wird, und durch Ausführen von Folgendem für jeden Teil ausgeführt wird:
- senkrecht zur optischen Achse (Z), Einrichten des Gravurbereichs (6), der dem Teil entspricht, am Umfang des Arbeitsbereichs (5),
- Gravur des Teils des Bildes.

9. Verfahren nach einem der Ansprüche 1 bis 8, das auf die Personalisierung eines Identitätsdokuments angewandt wird.

## Claims

1. A method for producing a first image and at least one second image, that can be selectively viewed by varying the angle of observation, by laser etching of a device (11) desired to be etched in an etching zone (6) covered with a lenticular grating (9), said laser etching being produced by means of a setup (1) comprising: a laser (2) capable of emitting a laser beam (12), a galvanometric head (3) capable of deflecting the laser beam (12) and a lens (4) capable of focusing the laser beam (12), and defining an optical axis (Z) and a working zone (5), **characterized in that** it comprises the following steps:
- placing, perpendicularly to the optical axis (Z), of the etching zone (6) at a first location (7), included in the working zone (5), and disposed at the periphery of said working zone (5), the first location (7) being at a distance from the optical axis (Z) such that the mean angle of the laser beam (12) relative to the optical axis (Z) is greater than or equal to 15°,
- etching of the first image by the laser (2) in the etching zone (6),
- placing, perpendicularly to the optical axis (Z), of the etching zone (6) at a second location (8), different from the first location (7), by a translational movement in one and the same plane, from the first location to said second location, of a tray carrying the device (11) being etched, the second location (8) being included in the working zone (5), and disposed at the periphery of said working zone (5), the second location (8) being at a distance from the optical axis (Z) such that the mean angle of the laser beam (12) relative to the optical axis (Z) is greater than or equal to 15°,
- etching of the second image by the laser (2) in the etching zone (6).

2. The method as claimed in claim 1, in which the etching of an image is produced by means of the laser beam (12) deflected by the galvanometric head (3) so as to scan the etching zone (6).

3. The method as claimed in any one of claim 1 or 2, in which the lens (4) is a scanning lens.

4. The method as claimed in any one of claims 1 to 3, in which the second location (8) is symmetrical to the first location (7), relative to the optical axis (Z).

5. The method as claimed in any one of claims 1 to 4, in which the lenticular grating (9) is cylindrical and in which the second location (8) is symmetrical to the first location (7), relative to an axis parallel to the axis (10) of the lenticular grating (9), intersecting the optical axis (Z) and situated in the plane of the lenticular grating (9).

6. The method as claimed in any one of claims 1 to 5, in which the first location (7) and the second location (8) are situated in one and the same plane relative to the optical axis (Z).

7. The method as claimed in any one of claims 1 to 6, in which the size of the etching zone (6) is small compared to the size of the working zone (5), preferentially less than 15% of the size of the working zone (5).

8. The method as claimed in any one of claims 1 to 7, in which the etching of a large image is produced by subdividing the image into contiguous parts, each part being assigned to a contiguous etching zone (6), and by performing, for each part:
- placing, perpendicularly to the optical axis (Z), of the etching zone (6) corresponding to said part at the periphery of the working zone (5),
- etching of said part of the image.

9. The method as claimed in any one of claims 1 to 8, applied to the customization of an identity document.
